# EUROPEAN PATENT SPECIFICATION

(11) **EP 2 826 736 B1**
(45) Date of publication and mention of the grant of the patent: **03.02.2016**
(21) Application number: 14176870.5
(22) Date of filing: 14.07.2014
(51) Int. Cl.: B65G 47/64, B65G 49/08, B65G 65/00, F27D 3/00

(54) **APPARATUS FOR LOADING/UNLOADING CERAMIC PRODUCTS IN/FROM A ROLLER STORAGE BOX**
VORRICHTUNG ZUM BE- UND ENTLADEN VON KERAMISCHEN PRODUKTEN IN ODER AUS EINER SPEICHERBOX MIT ROLLEN
APPAREIL DE CHARGEMENT/DÉCHARGEMENT DES PRODUITS CÉRAMIQUES DANS OU À PARTIR D'UNE BÔITE DE STOCKAGE À ROULEAUX

(30) Priority: 15.07.2013 IT BO20130365
(43) Date of publication of application: 21.01.2015
(73) Proprietor: Nuova Sima S.p.A., 40026 Imola (BO) (IT)
(72) Inventor: Bardi, Maurizio, 41043 Formigine (Modena) (IT)
(74) Representative: Dall'Olio, Christian

(56) References cited:
- EP-A1- 0 999 158
- EP-A1- 1 203 737
- EP-A1- 1 752 398

## Description

The present invention relates to the technical sector of apparatus for operating loading/unloading of ceramic products, in particular tiles, on/from roller storage boxes.

In the ceramic sector, work units are usually employed for automatically moving tiles.

These work units collect, i.e. extract the tiles from suitable containers for storage and transport of the tiles between the various work stations.

In known ways these containers, known as boxes, comprise a base to which two vertical flanks are associated, which flanks support a plurality of idle rollers identifying a series of plates able to restingly receive tiles.

The possibility of rotatably actuating the rollers by means of the work units enables automatically extracting/inserting the tiles from/to the planes of each box.

Document EP 1 752 398 A1 relates to an apparatus for loading/unloading ceramic products into/from roller storage boxes according to the preamble of claim 1, which uses a pair of lift planes, each operating on a corresponding box, enabling limiting the costs of installation and management of the plant.

The use of a pair of lift planes, each dedicated to operating on a corresponding box, enables depositing and/or collecting boxes in "non-operational" zones, i.e. zones without moving organs in the immediate vicinity, enabling excellent plant flexibility.

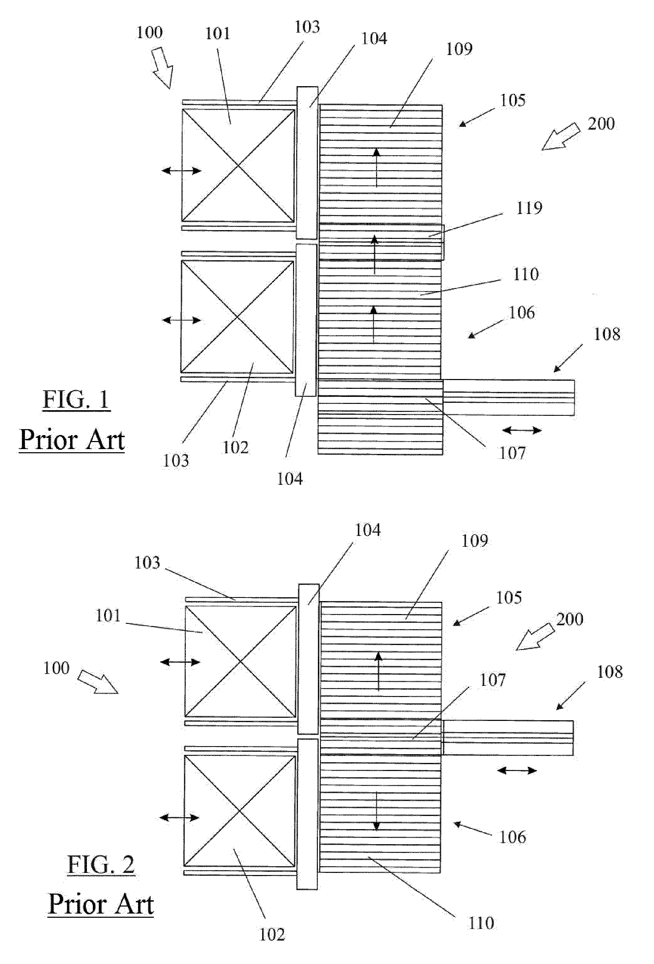

Figures 1, 2 illustrate plan views of two embodiments of an apparatus for loading/unloading ceramic products in/from roller storage boxes, realised according to the teachings of document EP 1 752 98 A1.

The apparatus (200) of known type comprises:
- a station (100) for loading/unloading which operates on at least a pair of roller boxes (101, 102) comprising vertically-mobile arms (103) with respect to a guiding frame (104) and provided with means for alternate motorization of the heads of the rollers of each track of the pair of boxes (101, 102);
- a first roller conveyor (107) positioned on a ground surface and included for interchanging ceramic products with a conveying line (108);
- a pair of tray elevators (105, 106) which move only vertically for spatial connection between the roller planes of the corresponding facing box (101, 102);
- means (109, 110) associated to each tray elevator (105, 106) for controlled interchanging of ceramic products between the relative facing box (101, 102) and the first roller conveyor (107) positioned on the ground surface.

In the present case two pairs of arms (103) are illustrated, which act on planes of each box (101, 102) and which move vertically with respect to a guide frame of the type comprising a pair of portals (104) which surmount each box (101, 102).

In figure 1 the first roller conveyor (107) is shown positioned flanked to one of the tray elevators (106), so as to enable interchanging of ceramic products, in particular tiles, directly with the tray elevator (106).

In this case a connecting roller conveyor (119) is comprised, positioned on a ground surface, interposed between the pair of tray elevators (105, 106) for interchanging the tiles with both the tray elevators (105, 106).

In figure 2 the first roller plane 107 is positioned interposed between the tray elevators (105, 106) in such a way as to enable interchange of tiles with both the tray elevators (105, 106).

The conveying line (108) comprises a straight conveyor belt which forms longitudinal rows of tiles on the first roller conveyor 107.

The controlled interchanging means of tiles between the relative facing box (101, 102) and the first roller conveyor (107) comprise, for each tray elevator (105, 106), a roller plane (109, 110) having powered parallel rollers cooperating with a plurality of transport belts, interposed between the parallel roller of the roller plane (109, 110), which can be controlled from a lower inactive position to an upper active position at which they generate a rest and transport plane for the tiles which is located above the plane identified by the motorized rollers.

Figures 1, 2 show the tiles moved by the conveying line (108) in a perpendicular direction to the rollers of the boxes (101, 102), while they are supplied to the lift trays (105, 106) in parallel directions to the rollers of the boxes (101, 102).

The biggest problem of the known-type apparatus (200) illustrated in figures 1, 2 is constituted by the constrained interaxis (or step) of the conveyor line 108 with respect to a reference box (101, 102).

This problem becomes more relevant when a plant is to be designed comprising two or more of the above-mentioned apparatus (200) flanked to one another, with the drawback of having to deal with constrained interaxes (or steps) also between adjacent conveyor lines (108).

In the configuration of figure 2 the first roller conveyor 107 is constrained in positioning between the two lift trays (105, 106), while in the configuration of figure 1 the first roller conveyor 107 is constrained to the positioning by the flank of one of the two lift trays (105, 106).

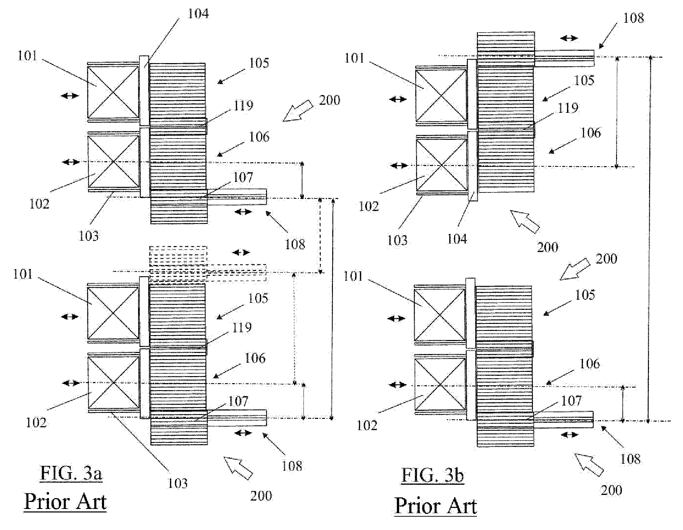

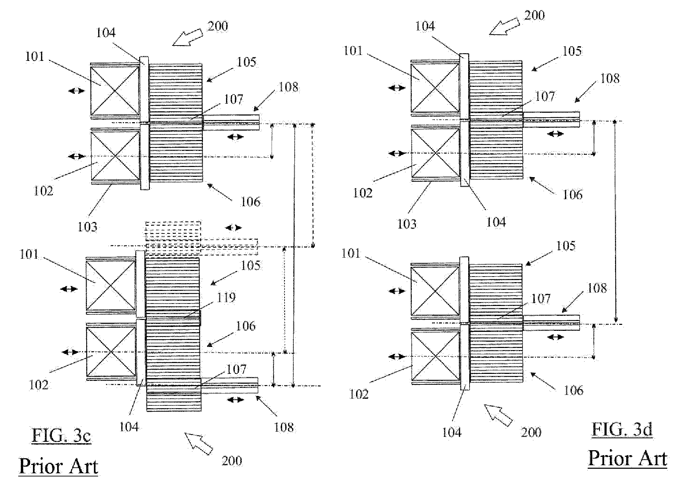

Purely by way of example, in the case of a ceramic plant comprising two apparatus 200 of the above-indicated type, they can be positioned constrained as follows:
a) both in the configuration of figure 1 (figures 3a, 3b);
b) both in the configuration of figure 2 (figure 3d);
c) one with the configuration of figure 1 and the other with the configuration of figure 2 (figure 3c);
thus enabling an extremely limited number of plant configurations which necessarily lead to an overall encumbrance that is not optimal in the design stage.

It is understood that by constrained interaxis or step (of a conveying line with respect to a reference box or between flanked conveyor lines) the minimum value thereof is referred-to, aimed at minimizing the overall encumbrance of the plant.

During the design step of the plant, it will be necessary to take account of the structural barriers of the building (for example perimeter and internal walls, support columns, pre-existing plant etc.).

Consequently the arrangements of the apparatus according to variants a), b), c) do not enable satisfactorily minimizing the overall encumbrance of the plant being designed, as:
- the interaxes between the respective conveyor lines, and
- the interaxes between each conveyor line and a reference box,
are constrained to a restricted number of values.

The aim of the present invention is to provide an apparatus for loading/unloading ceramic products into/from roller storage boxes which enables maximum flexibility in positioning the conveyor line of the ceramic products with respect to a reference storage box.

A further aim of the present invention is to disclose an apparatus for loading/unloading ceramic products which enables limited transversal encumbrances evaluated in a parallel direction to the rollers of the storage box.

A further aim of the present invention is to disclose an apparatus that is particularly reliable and versatile and which at the same time enables a high degree of plant flexibility.

To this can be added the desire to disclose a ceramic plant comprising at least two adjacent apparatus for loading/unloading ceramic products into/from roller storage boxes, which enables maximum flexibility in positioning the conveyor lines of ceramic products relatively to a corresponding reference storage box, and enables maximum flexibility in the reciprocal positioning of the respective conveyor lines.

The above-indicated aims are attained by means of an apparatus for loading/unloading of ceramic products into/out of roller storage boxes made in accordance with claim 1, and with a ceramic plant realized in accordance with claim 12.

The characteristics of the invention will emerge in the following in which some preferred but not exclusive embodiments of the invention are described by way of example, with reference to the appended tables of drawings in which:
- figures 1, 2 illustrate two plan views of an apparatus of known type;
- figures from 3a to 3d show corresponding plant configurations of known type with two of the apparatus illustrated in figures 1, 2;
- figures from 4 to 15 illustrate relative plan views of the apparatus of the invention in twelve embodiments.

With particular reference to the above-described tables of drawings, general reference numeral 1 denotes the present apparatus for loading/unloading ceramic products, in particular tiles, into/out of storage boxes (3, 4) of known type, each comprising a base to which two vertical flanks are associated which support a plurality of idle rollers identifying a series of planes able to restingly receive ceramic products, in particular tiles.

In known ways, described in document EP 1 752 398 A1, the apparatus 1 disclosed comprises:
- a station 2 for loading/unloading roller boxes operating on at least a pair of the roller boxes (3, 4), the station comprising at least an arm (5) that is vertically mobile with respect to a guide frame (6, 60) and provided with organs for alternating motorisation of heads of the rollers of each plane of the pair of boxes (3, 4);
- at least a first roller (70) conveyor (7), positioned on a ground surface, identifying a half-way axis (Y) perpendicular to the respective rollers, for interchanging ceramic products with a transport line (8);
- a pair of lift planes (30, 40) mobile only vertically, for spatially connecting the roller planes of the corresponding facing box (3, 4);
- means (31, 41) associated to each lift plane (30, 40) for commanded interchanging of ceramic products between the relative facing box (3, 4) and the first roller (70) conveyor (7) positioned on the ground.

In a preferred but not exclusive embodiment, illustrated in the accompanying figures, the controlled interchanging means associated to each lift plane (30, 40) comprise a plurality of parallel motorized rollers (31, 41).

The motorised rollers (31, 41) are advantageously orientated parallel to the rollers of the boxes (3, 4) for enabling interchanging of ceramic products between the boxes (3, 4) and the lift planes (30, 40) according to a perpendicular trajectory to the respective rollers.

In known ways, the arm (5), operating in the box loading/unloading station (2), can be activated vertically independently of the vertical movement of the pair of lift planes (30, 40); likewise the lift planes (30, 40) can be vertically moved independently of one another.

In a novel way, the apparatus 1 of the invention further comprises conveyor means (9) positioned on the ground for commanded interchanging of ceramic products between each lift plane (30, 40) and the first roller conveyor (7), the conveyor (7) being positionable in a variable configuration, with respect to the conveyor means (9), along a perpendicular direction to the half-way axis (Y).

The interchanging of ceramic products between the conveyor means (9) and each lift plane (30, 40) advantageously occurs in perpendicular directions with respect to the rollers of the lift planes 30, 40.

In accordance with the embodiments illustrated in figures from 4 to 15, the transport line (8) moves the ceramic products in a direction Z that is parallel to the half-way axis Y of the first roller conveyor (7).

In combination with or alternatively to the characteristic by which the first conveyor (7) is positionable in a variable configuration, with respect to the conveyor means 9, along a perpendicular direction to the half-way axis Y thereof, the transport line (8) is also positionable in a variable configuration, with respect to the first conveyor (7), in a perpendicular direction to the half-way axis Y.

After having positioned the loading/unloading station (2) of the boxes (3, 4), together with the corresponding lift planes (30, 40), differently to the prior art it is possible to continuously position, along a perpendicular direction to the half-way axis Y, alternatively and/or in combination:
✔ the first conveyor (7) in a variable configuration with respect to the conveyor means (9);
✔ the transport line (8) in a variable configuration with respect to the first conveyor (7).

For a prefixed configuration of the transport line (8) with respect to the box loading/unloading station (2), it is therefore possible to position the first conveyor (7) in a variable configuration with respect to the conveyor means (9), displacing it in a perpendicular direction to the half-way axis Y.

In the same way, for a predetermined configuration of the first conveyor (7) with respect to the box loading/unloading station (2), it is possible to position the transport line (8) in a variable configuration with respect to the first conveyor (7), by displacing it in a perpendicular direction to the half-way axis Y.

Alternatively, for a predetermined configuration of the box loading/unloading station, the first conveyor (7) can be positioned in a variable configuration with respect to the conveyor means (9), and the transport line in a variable configuration with respect to the first conveyor (7).

In this way it is possible to continuously and unconstrainedly vary the interaxis between a reference box (3, 4) and the transport line (8), and the interaxis between the same reference box (3, 4) and the first roller conveyor (7), as well as the interaxis between the transport line 8 and the first roller conveyor (7).

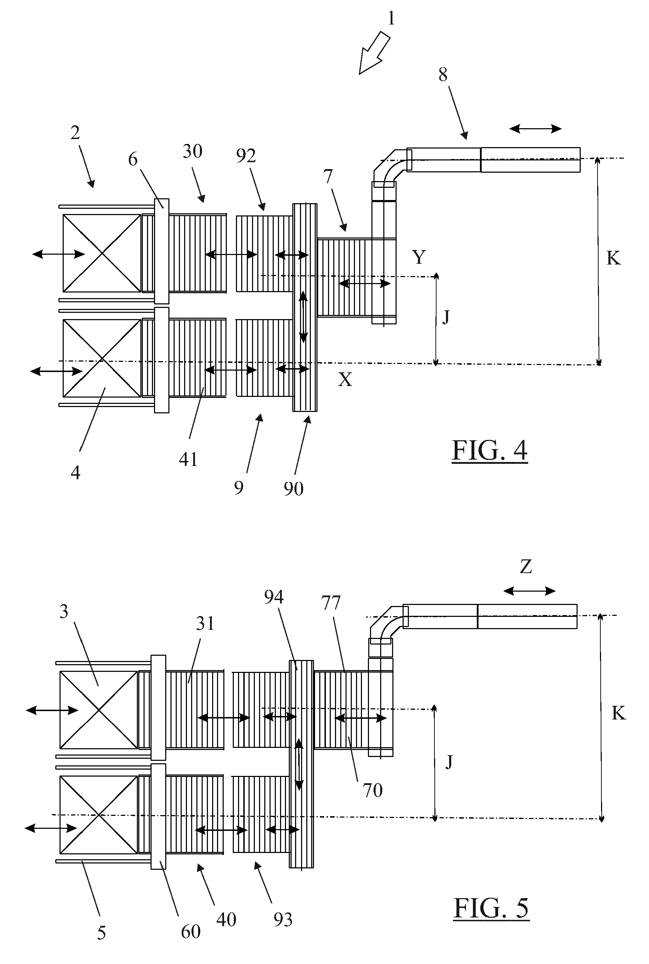

Figures 4-15 illustrate, using general reference letter X, the half-way axis of the reference box (4), in a perpendicular direction to the respective axis, while general reference letter K denotes the interaxis between the reference box (4) and the transport line (8), and general reference letter J denotes the interaxis between the reference box (4) and the first roller conveyor (7).

The above-described advantageous characteristics of the apparatus 1 of the invention enable satisfactorily minimising the overall volume of the ceramic plant as, differently to the prior art, the interaxes between each transport line and the box loading/unloading station are no longer limited to a small number of values, especially with reference to the minimum value thereof.

In a particular embodiment, for a predetermined configuration of the first conveyor (7) with respect to the box loading/unloading station (2), the transport line (8) is positionable in a variable configuration with respect to the first conveyor (7) internally of the spatial region delimited by the transversal encumbrance of the two lift planes (30, 40), the encumbrance being evaluated in the direction of the respective rollers (31, 41).

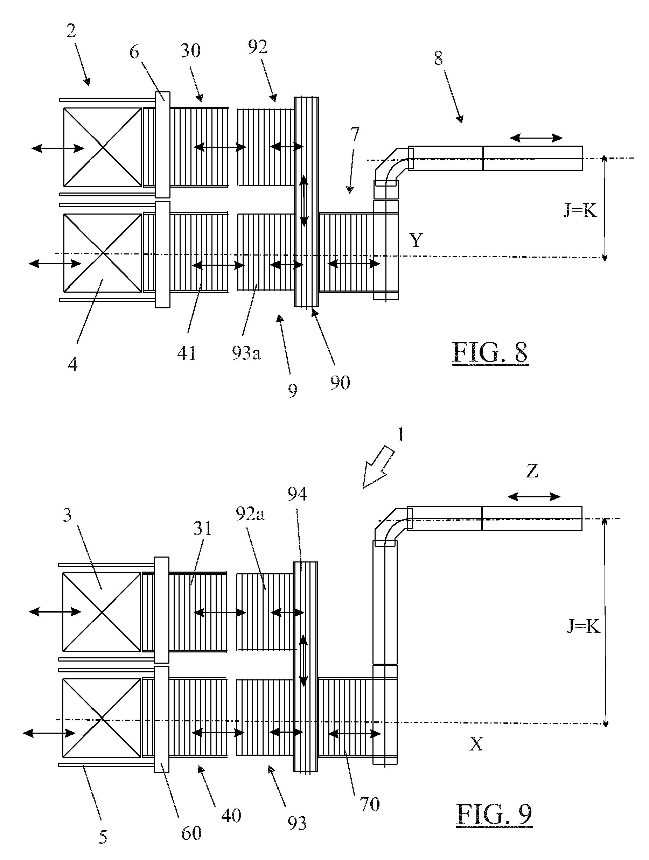

This characteristic is clearly deducible from figures 8, 10, 14.

Figures 4-7, 9, 11-13, 15, differently, show the transport line (8) positioned in a variable configuration with respect to the first conveyor (7), externally of the spatial region delimited by the transversal encumbrance of the two lift planes (30, 40).

According to requirements, therefore, it is possible to position the transport line (8) in variable configuration with respect to the first conveyor (7), displacing it in a perpendicular direction to the half-way axis Y of the first conveyor (7), either internally or externally of the spatial region delimited by the transversal encumbrance of the two lift planes (30, 40).

In a further embodiment, the first roller conveyor (7) is positionable in a variable configuration with respect to the conveyor means (9), displacing it in a perpendicular direction to the half-way axis Y, maintaining a peripheral edge (77), supporting the ends of the rollers, externally of the spatial region delimited by the transversal encumbrance of the two lift planes (30, 40), calculated in the direction of the respective rollers (31, 41).

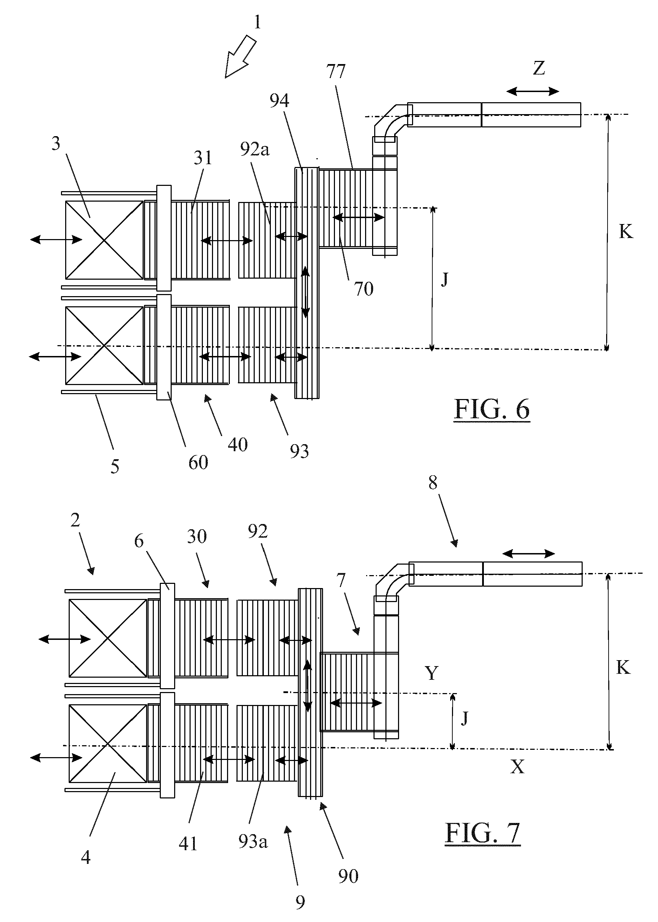

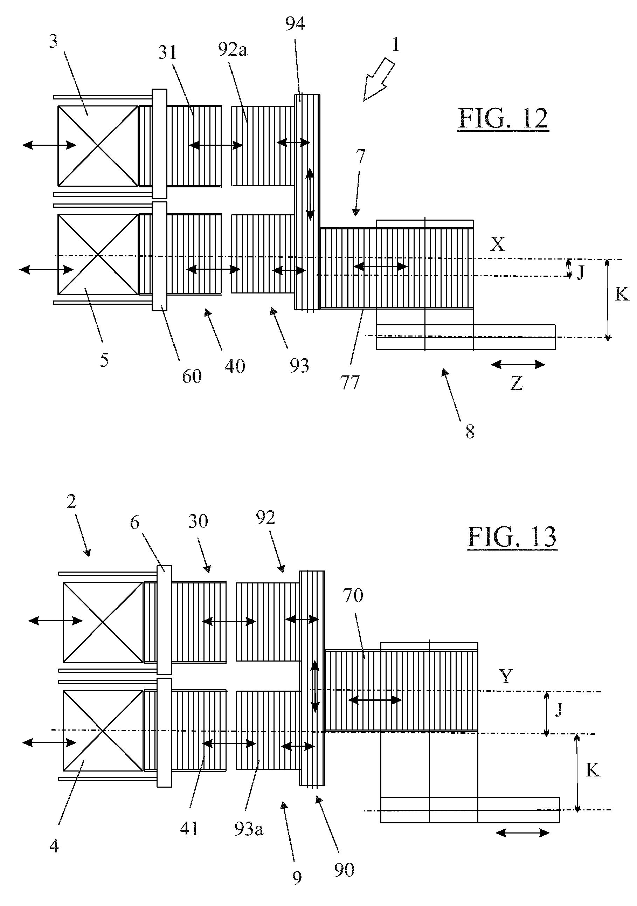

This characteristic is clearly deducible from figures 6, 12.

This characteristic can be necessary in the case of encumbrances not attributable to the ceramic plant, such as for example support columns, pre-existing plant etc.

Differently, in figures 4-5, 7-11, 13-15, the first roller conveyor (7) has been positioned in a variable configuration, with respect to the conveyor means (9), internally of the spatial region delimited by the transversal encumbrance of the two lift planes (30, 40).

The combination of the characteristics for which the first conveyor (7) and the transport line (8) are positioned, in a variable configuration with respect to the box loading/unloading station (2), internally of the spatial region delimited by the transversal encumbrance of the two lift planes (30, 40), enables drastically minimizing the transversal encumbrance of the apparatus (1) which is obviously defined by the transversal encumbrance of the two lift planes (30, 40).

This characteristic is clearly deducible from figures 8, 10, 14.

With reference to the accompanying tables, purely by way of example, the conveyor means (9) comprise a pair of conveyors, second (92) and third (93), positioned on a ground surface, and second means cooperating with each conveyor, second (92) and third (93), for controlled interchanging of ceramic products between the corresponding lift plane (30, 40) and the first roller conveyor (7).

In a particular embodiment, illustrated in figures 4-15, the second interchanging means comprise:
- a plurality of parallel rollers (92a, 93a) associated to each conveyor, second (92) and third (93);
- a plurality of motorised transfer rollers (94) orientated parallel to the rollers (92a, 93a) of the conveyors (92, 93);
- a plurality of transport belts (90) interposed between the transfer rollers (94), with which they cooperate, activated from an inactive lower position to an active upper position at which they generate a rest and transport surface for the ceramic products which surface is located above the plane identified by the motorised transfer rollers (94).

The motorised rollers (92a, 93a) of the second and third conveyors (92, 93), the motorised transfer rollers (94), and the rollers (70) of the first conveyor (7) are advantageously orientated parallel to one another, so as to enable interchanging ceramic products in prevalently perpendicular directions with respect to the respective rollers (92a, 93a, 70).

The transport belts (90) and the transfer rollers (94) cooperate with the respective conveyors (7, 92, 93) in order to enable correct interchanging of ceramic products between the first conveyor (7) and the second and third conveyors (92, 93).

In particular the transport belts (90) have the task of sorting the ceramic products in arrival from the first roller (70) conveyor (7) alternatively towards the second conveyor (92) or towards the third conveyor (93) (see the arrows parallel to the rollers 70).

In figures 4, 7, 11, 15, the first conveyor (7) is positioned with the half-way axis Y dealigned with respect to the half-way axes X of the boxes (3, 4); in these configurations the first conveyor (7) is positioned internally of the spatial region delimited by the transversal encumbrance of the two lift planes (30, 40), while the transport line (8) is positioned externally of the spatial region, in proximity of the boxes (3).

In figure 5 the first conveyor (7) is positioned with the half-way axis Y aligned with the half-way axis X of the box (3); in this configuration the first conveyor (7) is positioned internally of the spatial region delimited by the transversal encumbrance of the two lift planes (30, 40), while the transport line (8) is positioned externally of the spatial region.

In figures 6, 12, the first conveyor (7) is positioned with the half-way axis Y dealigned with respect to the half-way axes X of the boxes (3, 4); in this configuration the first conveyor (7) is positioned with a peripheral edge (77) thereof, supporting the ends of the rollers (70), external of the spatial region delimited by the transversal encumbrance of the lift planes (30, 40), with the transport line (8) also positioned externally of the same spatial region.

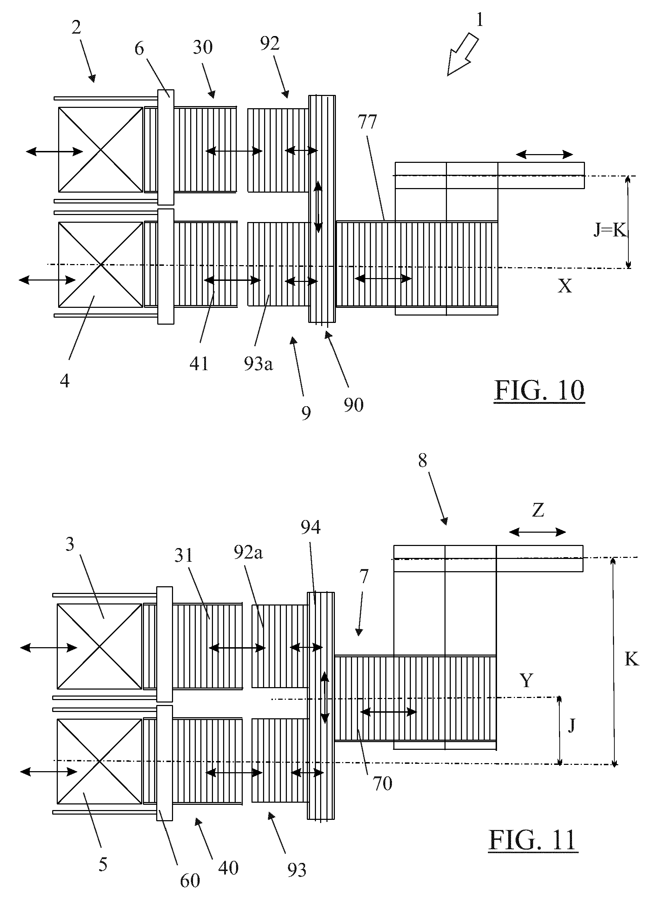

In figures 8, 10 the first conveyor (7) is positioned with the half-way axis Y aligned with the half-way axis X of the box (4); in these configurations the first conveyor (7) and the transport line (8) are positioned internally of the spatial region delimited by the transversal encumbrance of the two lift planes (30, 40).

In figure 9 the first conveyor (7) is still positioned with the half-way axis Y aligned with the half-way axis X of the box (4); in this configuration the first conveyor (7) is positioned internally of the spatial region delimited by the transversal encumbrance of the two lift planes (30, 40), while the transport line (8) is positioned externally of the same spatial region.

In figure 13 the first conveyor (7) is positioned with the half-way axis Y dealigned with respect to the half-way axes X of the boxes (3, 4); in this configuration the first conveyor (7) is positioned internally of the spatial region delimited by the transversal encumbrance of the two lift planes (30, 40), while the transport line (8) is positioned externally of the same spatial region, in proximity to the box (4) (differently to figures 4, 7 and 11, in which the transport line (8) is positioned in proximity of the other box (3).

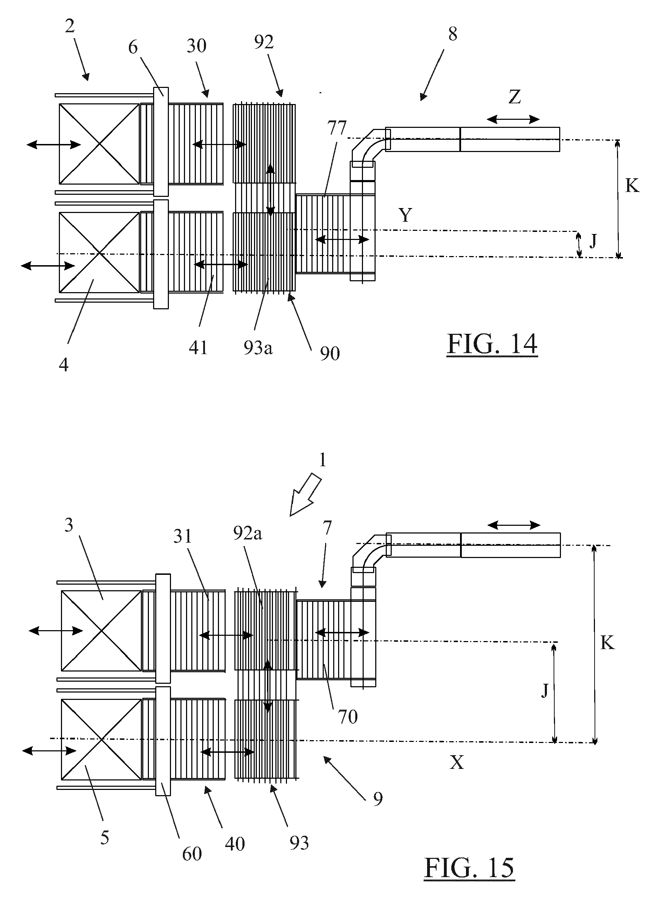

In figure 14 the first conveyor 7 is positioned with the half-way axis Y dealigned with respect to the half-way axis X of the boxes (3, 4); in this configuration the first conveyor (7) and the transport line (8) are positioned internally of the spatial region delimited by the transversal encumbrance of the two lift planes (30, 40).

In accordance with the plant specifications the transport line (8) can comprise, in proximity of the first roller conveyor (7), singly or in combination, a straight belt conveyor, an angular belt conveyor, or a square conveyor.

In general terms the ceramic products can be transported on the transport line (8) in longitudinal or transversal rows, or on levels.

On the basis of the above, it is clear how the proposed apparatus for loading/unloading ceramic products into/out of roller storage boxes enables maximum flexibility in the positioning of the transport line of ceramic products with respect to a reference storage box.

From the foregoing it can easily be seen how, from viewing even only figures 4-15 in which the extreme variability of the interaxes between a reference box and the transport line, between the reference box and the first roller conveyor, between the transport line and the first roller conveyor (see general references Y, K) are illustrated.

The great flexibility of positioning of the transport line and the first roller conveyor and the first roller conveyor with respect to the box loading/unloading station (or with respect to a reference box) is enabled by the possibility of positioning the first roller conveyor in a variable configuration, with respect to the conveyor means, along a perpendicular direction to the half-way axis thereof, as well as the possibility of positioning the transport line in a variable configuration, with respect to the first conveyor, along a perpendicular direction to the half-way axis of the first conveyor.

The apparatus of the invention enables limited transversal encumbrances, the encumbrances being evaluated in a parallel direction to the rollers of the boxes and the lift planes.

The minimum transversal encumbrance can be achieved by positioning both the transport line and the first roller conveyor, in a variable configuration, internally of the spatial region delimited by the transversal encumbrance of the two lift planes, the encumbrance being evaluated in the direction of the respective rollers.

Alternatively the first roller conveyor can be positioned in the spatial region delimited by the transversal encumbrance of the two lift planes, with the transport line positioned externally of the spatial region.

The above-described advantages of the present apparatus enable obtaining a high degree of plant flexibility during the design step and the extension step.

A ceramic plant comprising at least two of the apparatus of the invention, positioned adjacent to one another, without doubt provides maximum flexibility in the absolute and reciprocal positioning of the transport lines of the ceramic products the plant is dealing with.

This adds to the advantage of the design step of the plant, which will necessarily have to take account of the structural barriers existing in the facility (for example perimeter walls and internal walls, support columns, pre-existing plant, etc.), satisfactorily minimizing the overall size of the plant, giving the possibility of continuously varying the interaxes between the respective transport lines and the interaxes between each transport line and a reference storage box, which are no longer constrained to a restricted number of values as in the solutions of the prior art.

## Claims

1. An apparatus for loading/unloading ceramic products into/from roller storage boxes, comprising:
- a station (2) for loading/unloading roller boxes operating on at least a pair of the roller boxes (3, 4), the station comprising at least an arm (5) that is vertically mobile with respect to a guide frame (6, 60) and provided with organs for alternating motorisation of heads of the rollers of each plane of the pair of boxes (3, 4);
- at least a first roller (70) conveyor (7), positioned on a ground surface, identifying a half-way axis (Y) perpendicular to the respective rollers, for interchanging ceramic products with a transport line (8);
- a pair of lift planes (30, 40) mobile only vertically, for spatially connecting the roller planes of the corresponding facing box (3, 4);
- means (31, 41) associated to each lift plane (30, 40) for commanded interchanging of ceramic products between the relative facing box (3, 4) and the first roller (70) conveyor (7) positioned on the ground;
the apparatus being ***characterised in that*** it further comprises:
conveyor means (9) positioned on the ground for commanded interchanging of ceramic products between each lift plane (30, 40) and the first roller (70) conveyor (7);
the first roller (70) conveyor (7) being positionable in a variable configuration, with respect to the conveyor means (9), along a perpendicular direction to the half-way axis (Y);
with interchanging of ceramic products between the conveyor means (9) and each lift plane (30, 40) which occurs in perpendicular directions with respect to the rollers of the box (3, 4).

2. The apparatus of claim 1, ***characterised in that*** the transport line (8) moves the ceramic products in a direction (Z) parallel to the half-way axis (Y) of the first roller (70) conveyor (7); the transport line (8) being positionable in a variable configuration, with respect to the first conveyor (7), along a perpendicular direction to the half-way axis (Y) of the first conveyor (7).

3. The apparatus of claim 2, ***characterised in that*** the transport line (8) is positionable in a variable configuration internally of the spatial region delimited by the transversal encumbrance of the two lift planes (30, 40); the transversal encumbrance being evaluated in the direction of the rollers of the boxes (3, 4).

4. The apparatus of one of claims from 1 to 3, ***characterised in that*** the first roller (70) conveyor (7) is positionable in a variable configuration with at least a peripheral edge (77), for supporting the ends of the rollers, externally of the spatial region delimited by the transversal encumbrance of the two planes (30, 40); the transversal encumbrance being evaluated in the direction of the rollers of the boxes (3, 4).

5. The apparatus of one of claims from 1 to 3, ***characterised in that*** the first roller (70) conveyor (7) is positionable in a variable configuration internally of the spatial region delimited by the transversal encumbrance of the two lift planes (30, 40); the transversal encumbrance being evaluated in the direction of the rollers of the boxes (3, 4).

6. The apparatus of one of claims from 1 to 5, ***characterised in that*** the interchanging means associated to each lift plane (30, 40) comprise a plurality of motorised parallel rollers (31, 41) orientated parallel to the rollers of the box (3, 4), in order to enable interchange of ceramic products between the boxes (3, 4) and the lift planes (30, 40) according to a perpendicular trajectory to the respective rollers.

7. The apparatus of claim 6, ***characterised in that*** the rollers (70) of the first conveyor (7) are orientated parallel to the rollers (31, 41) of the lift planes (30, 40) so as to enable interchanging of ceramic products with the conveyor means (9) in perpendicular directions with respect to the rollers (31, 41) of the lift planes (30, 40) and the rollers of the boxes (3, 4).

8. The apparatus of one of claims from 1 to 7, ***characterised in that*** that conveyor means (9) comprise: a pair of conveyors, second (92) and third (93), positioned on the ground; second interchange means cooperating with each conveyor, second (92) and third (93), for commanded interchange of ceramic products between the corresponding lift plane (30, 40) and the first roller conveyor (70).

9. The apparatus of claim 8, ***characterised in that*** the second interchange means comprise: a plurality of motorised parallel rollers (92a, 93a) for each conveyor, second (92) and third (93); a plurality of motorised transfer rollers (94) orientated parallel to the rollers (92a, 93a) of the conveyors (92, 93); a plurality of transport belts (90) interposed between the transfer rollers (94), with which they cooperate, activated from an inactive lower position to an active upper position at which they generate a rest and transport surface for the ceramic products which surface is located above the plane identified by the motorised transfer rollers (94).

10. The apparatus of claim 9 and 6, or 7, ***characterised in that*** the rollers (92a, 93a) of the conveyors, second (92) and third (93), are orientated parallel to the rollers (31, 41) of the lift planes (30, 40), in order to enable interchanging of ceramic products with the respective lift plane (30, 40), in perpendicular directions with respect to the rollers (31, 41) of the lift planes (30, 40).

11. The apparatus of one of claims from 1 to 10, ***characterised in that*** the transport line (8) comprises, in proximity of the first roller (70) conveyor (7), a straight conveyor belt, an angular conveyor belt and a right-angled conveyor, singly or in combination.

12. A ceramic plant comprising at least two adjacent apparatuses (1) for loading/unloading ceramic products into/from roller storage boxes according to one of claims from 1 to 11.

## Patentansprüche

1. Vorrichtung zum Be-/Entladen von keramischen Produkten in/aus Speicherboxen mit Rollen, Folgendes beinhaltend:
- eine Station (2) zum Be-/Entladen von Rollenboxen, die an zumindest einem Paar der Rollenboxen (3, 4) arbeitet, wobei die Station zumindest einen Arm (5) beinhaltet, der vertikal relativ zu einem Führungsrahmen (6, 60) beweglich ist und Organe für den wechselweisen motorischen Antrieb von Kopfteilen der Rollen jeder Ebene des Paares von Boxen (3, 4) aufweist;
- zumindest einen ersten Förderer (7) mit Rollen (70), der auf einer Bodenfläche aufgestellt ist und eine Mittellinienachse (Y) orthogonal zu den entsprechenden Rollen bildet, für den Austausch von keramischen Produkten mit einer Transportlinie (8);
- ein Paar Hubebenen (30, 40), die nur vertikal beweglich sind, zur räumlichen Verbindung der Rollenebenen der entsprechenden gegenüberliegenden Box (3, 4);
- Mittel (31, 41), die mit jeder Hubebene (30, 40) verbunden sind, zum angesteuerten Austausch von keramischen Produkten zwischen der entsprechenden gegenüberliegenden Box (3, 4) und dem ersten bodenstehenden Förderer (7) mit Rollen (70);
wobei die Vorrichtung ***dadurch gekennzeichnet ist, dass*** sie ferner beinhaltet:
bodenstehende Fördermittel (9) für den angesteuerten Austausch von keramischen Produkten zwischen jeder Hubebene (30, 40) und dem ersten Förderer (7) mit Rollen (70);
wobei der erste Förderer (7) mit Rollen (70) in variabler Konfiguration relativ zu den Fördermitteln (9) entlang einer zu der Mittellinienachse (Y) orthogonalen Richtung angeordnet werden kann;
wobei der Austausch der keramischen Produkte zwischen den Fördermitteln (9) und jeder Hubebene (30, 40) in orthogonalen Richtungen relativ zu den Rollen der Box (3, 4) erfolgt.

2. Vorrichtung nach Anspruch 1, ***dadurch gekennzeichnet, dass*** die Transportlinie (8) die keramischen Produkte in einer Richtung (Z) parallel zu der Mittellinienachse (Y) des ersten Förderers (7) mit Rollen (70) bewegt; wobei die Transportlinie (8) in variabler Konfiguration relativ zu dem ersten Förderer (7) entlang einer zu der Mittellinienachse (Y) des ersten Förderers (7) orthogonalen Richtung angeordnet werden kann.

3. Vorrichtung nach Anspruch 2, ***dadurch gekennzeichnet, dass*** die Transportlinie (8) in variabler Konfiguration innerhalb des räumlichen Bereichs angeordnet werden kann, der durch das Quermaß der zwei Hubebenen (30, 40) begrenzt wird; wobei das Quermaß in Richtung der Rollen der Boxen (3, 4) bewertet wird.

4. Vorrichtung nach einem der Ansprüche von 1 bis 3, ***dadurch gekennzeichnet, dass*** der erste Förderer (7) mit Rollen (70) in variabler Konfiguration angeordnet werden kann, mit zumindest einer peripheren Kante (77), zum Tragen der Enden der Rollen, außerhalb des räumlichen Bereichs, der durch das Quermaß der zwei Ebenen (30, 40) begrenzt wird; wobei das Quermaß in Richtung der Rollen der Boxen (3, 4) bewertet wird.

5. Vorrichtung nach einem der Ansprüche von 1 bis 3, ***dadurch gekennzeichnet, dass*** der erste Förderer (7) mit Rollen (70) in variabler Konfiguration innerhalb das räumlichen Bereichs angeordnet werden kann, der durch das Quermaß der zwei Hubebenen (30, 40) begrenzt wird; wobei das Quermaß in Richtung der Rollen der Boxen (3, 4) bewertet wird.

6. Vorrichtung nach einem der Ansprüche von 1 bis 5, ***dadurch gekennzeichnet, dass*** die jeder Hubebene (30, 40) zugeordneten Austauschmittel mehrere motorisierte parallele Rollen (31, 41) beinhalten, die parallel zu den Rollen der Box (3, 4) ausgerichtet sind, um den Austausch der keramischen Produkte zwischen den Boxen (3, 4) und den Hubebenen (30, 40) entsprechend einer zu den entsprechenden Rollen orthogonal verlaufenden Bewegungsbahn zu ermöglichen.

7. Vorrichtung nach Anspruch 6, ***dadurch gekennzeichnet, dass*** die Rollen (70) des ersten Förderers (7) parallel zu den Rollen (31, 41) der Hubebenen (30, 40) ausgerichtet sind, um den Austausch von keramischen Produkten mit den Fördermitteln (9) in relativ zu den Rollen (31, 41) der Hubebenen (30, 40) und den Rollen der Boxen (3, 4) orthogonalen Richtungen zu ermöglichen.

8. Vorrichtung nach einem der Ansprüche von 1 bis 7, ***dadurch gekennzeichnet, dass*** die Fördermittel (9) Folgendes beinhalten: ein Paar Förderer, nämlich einen zweiten (92) und einen dritten (93) Förderer, die auf dem Boden aufgestellt sind; zweite Austauschmittel, die mit jedem Förderer, dem zweiten (92) und dem dritten (93), zusammenwirken, für den angesteuerten Austausch von keramischen Produkten zwischen der entsprechenden Hubebene (30, 40) und dem ersten Förderer (7) mit Rollen (70).

9. Vorrichtung nach Anspruch 8, ***dadurch gekennzeichnet, dass*** die zweiten Austauschmittel Folgendes beinhalten: mehrere motorisierte parallele Rollen (92a, 93a) für jeden Förderer, nämlich den zweiten (92) und den dritten (93) Förderer; mehrere motorisierte Transferrollen (94), die parallel zu den Rollen (92a, 93a) der Förderer (92, 93) ausgerichtet sind; mehrere Transportbänder (90), die zwischen den Transferrollen (94) angeordnet sind, mit denen sie zusammenwirken, und die betätigt werden, um von einer inaktiven unteren Stellung in eine aktive obere Stellung zu wechseln, in der sie eine Auflage- und Transportoberfläche für die keramischen Produkte bilden, die sich oberhalb der von den motorisierten Transferrollen (94) gebildeten Ebene befindet.

10. Vorrichtung nach Anspruch 9 und 6, oder 7, ***dadurch gekennzeichnet, dass*** die Rollen (92a, 93a) der Förderer, nämlich des zweiten (92) und dritten (93) Förderers, parallel zu den Rollen (31, 41) der Hubebenen (30, 40) ausgerichtet sind, um den Austausch von keramischen Produkten mit der entsprechenden Hubebene (30, 40) in relativ zu den Rollen (31, 41) der Hubebenen (30, 40) orthogonalen Richtungen zu ermöglichen.

11. Vorrichtung nach einem der Ansprüche von 1 bis 10, ***dadurch gekennzeichnet, dass*** die Transportlinie (8), in der Nähe des ersten Förderers (7) mit Rollen (70), alleine oder in Kombination, ein gerades Förderband, ein angewinkeltes Förderband und einen rechtwinkligen Förderer beinhaltet.

12. Keramikanlage, beinhaltend zumindest zwei aneinander angrenzende Vorrichtungen (1) zum Be-/Entladen von keramischen Produkten in/aus Speicherboxen mit Rollen nach einem der Ansprüche von 1 bis 11.

## Revendications

1. Un appareil de chargement/déchargement de produits céramiques dans ou à partir d'une boîte de stockage à rouleaux, comprenant:
- une station (2) pour charger/décharger des boîtes à rouleaux opérant sur au moins une paire de boîtes à rouleaux (3, 4), la station comprenant au moins un bras (5) qui est verticalement mobile par rapport à un châssis de guidage (6, 60) et muni d'organes pour la motorisation alternée des têtes des rouleaux de chaque plan de la paire de boîtes (3, 4) ;
- au moins un premier transporteur (7) à rouleaux (70), positionné au sol, identifiant un axe médian (Y) perpendiculaire aux rouleaux respectifs, pour échanger des produits céramiques avec une ligne de transport (8) ;
- une paire de plans élévateurs (30, 40) mobiles uniquement verticalement, pour relier spatialement les plans de rouleaux de la boîte (3, 4) correspondante située en face ;
- des moyens (31, 41) associés à chaque plan élévateur (30, 40) pour l'échange commandé de produits céramiques entre la boîte (3, 4) correspondante située en face et le premier transporteur (7) à rouleaux (70) positionné au sol ;
l'appareil étant **caractérisé en ce qu'**il comprend en outre :
des moyens transporteurs (9) positionnés au sol pour l'échange commandé de produits céramiques entre chaque plan élévateur (30, 40) et le premier transporteur (7) à rouleaux (70);
le premier transporteur (7) à rouleaux (70) pouvant être positionné dans une configuration variable, par rapport aux moyens transporteurs (9), le long d'une direction perpendiculaire à l'axe médian (Y);
avec l'échange de produits céramiques entre les moyens transporteurs (9) et chaque plan élévateur (30, 40) qui a lieu dans des directions perpendiculaires par rapport aux rouleaux de la boîte (3, 4).

2. L'appareil selon la revendication 1, **caractérisé en ce que** la ligne de transport (8) déplace les produits céramiques dans une direction (Z) parallèle à l'axe médian (Y) du premier transporteur (7) à rouleaux (70) ; la ligne de transport (8) pouvant être positionnée dans une configuration variable, par rapport au premier transporteur (7), le long d'une direction perpendiculaire à l'axe médian (Y) du premier transporteur (7).

3. L'appareil selon la revendication 2, **caractérisé en ce que** la ligne de transport (8) peut être positionnée dans une configuration variable à l'intérieur de la région spatiale délimitée par l'encombrement transversal des deux plans élévateurs (30, 40) ; l'encombrement transversal étant évalué dans la direction des rouleaux des boîtes (3, 4).

4. L'appareil selon une des revendications de 1 à 3, **caractérisé en ce que** le premier transporteur (7) à rouleaux (70) peut être positionné dans une configuration variable avec au moins un bord périphérique (77), pour supporter les extrémités des rouleaux, à l'extérieur de la région spatiale délimitée par l'encombrement transversal des deux plans (30, 40) ; l'encombrement transversal étant évalué dans la direction des rouleaux des boîtes (3, 4).

5. L'appareil selon une des revendications de 1 à 3, **caractérisé en ce que** le premier transporteur (7) à rouleaux (70) peut être positionné dans une configuration variable à l'intérieur de la région spatiale délimitée par l'encombrement transversal des deux plans élévateurs (30, 40) ; l'encombrement transversal étant évalué dans la direction des rouleaux des boîtes (3, 4).

6. L'appareil selon une des revendications de 1 à 5, **caractérisé en ce que** les moyens d'échange associés à chaque plan élévateur (30, 40) comprennent une pluralité de rouleaux parallèles motorisés (31, 41) orientés parallèlement aux rouleaux de la boîte (3, 4), de manière à permettre l'échange de produits céramiques entre les boîtes (3, 4) et les plans élévateurs (30, 40) selon une trajectoire perpendiculaire aux rouleaux respectifs.

7. L'appareil selon la revendication 6, **caractérisé en ce que** les rouleaux (70) du premier transporteur (7) sont orientés parallèlement aux rouleaux (31, 41) des plans élévateurs (30, 40) de manière à permettre l'échange de produits céramiques avec les moyens transporteurs (9) dans des directions perpendiculaires par rapport aux rouleaux (31, 41) des plans élévateurs (30, 40) et aux rouleaux des boîtes (3, 4).

8. L'appareil selon une des revendications de 1 à 7, **caractérisé en ce que** les moyens transporteurs (9) comprennent : une paire de transporteurs, deuxième (92) et troisième (93), positionnés au sol ; des deuxièmes moyens d'échange coopérant avec chaque transporteur, le deuxième (92) et le troisième (93), pour l'échange commandé de produits céramiques entre le plan élévateur (30, 40) correspondant et le premier transporteur (7) à rouleaux (70).

9. L'appareil selon la revendication 8, **caractérisé en ce que** les deuxièmes moyens d'échange comprennent : une pluralité de rouleaux parallèles motorisés (92a, 93a) pour chaque transporteur, deuxième (92) et troisième (93) ; une pluralité de rouleaux de transfert motorisés (94) orientés parallèlement aux rouleaux (92a, 93a) des transporteurs (92, 93) ; une pluralité de courroies de transport (90) interposées entre les rouleaux de transfert (94), avec lesquels elles coopèrent, actionnées d'une position inactive basse à une position active haute au niveau de laquelle elles définissent une surface d'appui et de transport pour les produits céramiques, ladite surface étant située au-dessus du plan identifié par les rouleaux de transfert motorisés (94).

10. L'appareil selon les revendications 9 et 6, ou 7, **caractérisé en ce que** les rouleaux (92a, 93a) des transporteurs, deuxième (92) et troisième (93), sont orientés parallèlement aux rouleaux (31, 41) des plans élévateurs (30, 40), de manière à permettre l'échange de produits céramiques avec le plan élévateur (30, 40) respectif, dans des directions perpendiculaires par rapport aux rouleaux (31, 41) des plans élévateurs (30, 40).

11. L'appareil selon une des revendications de 1 à 10, **caractérisé en ce que** la ligne de transport (8) comprend, à proximité du premier transporteur (7) à rouleaux (70), une bande transporteuse rectiligne, une bande transporteuse angulaire et un transporteur à angle droit, unitairement ou en combinaison.

12. Une installation céramique comprenant au moins deux appareils (1) adjacents pour le chargement/déchargement de produits céramiques dans ou à partir de boîtes de stockage à rouleaux selon une des revendications de 1 à 11.
